# FASCICULE DE BREVET EUROPEEN

(11) **EP 3 116 726 B1**
(45) Date de publication et mention de la délivrance du brevet: **09.10.2019**
(21) Numéro de dépôt: 15708542.4
(22) Date de dépôt: 10.03.2015
(51) Int. Cl.: B60C 11/13, B29D 30/06, B29C 33/38, B29L 30/00, B60C 11/00

(54) **PNEUMATIQUE COMPORTANT UNE TEXTURE A FORT CONTRASTE DANS UNE RAINURE**
REIFEN MIT HOCH-KONTRASTREICHER TEXTUR IN EINER RILLE
TYRE INCLUDING A HIGH-CONTRAST TEXTURE IN A GROOVE

(30) Priorité: 10.03.2014 FR 1451917
(43) Date de publication de la demande: 18.01.2017
(73) Titulaire: Compagnie Générale des Etablissements Michelin, 63000 Clermont-Ferrand (FR)
(72) Inventeur: MUHLHOFF, Olivier, F-63040 Clermont-Ferrand Cedex 9 (FR); CAMBON, Stéphanie, F-63040 Clermont-Ferrand Cedex 9 (FR); EMORINE, Hélène, F-63040 Clermont-Ferrand Cedex 9 (FR); LARREGAIN, Arnaud, F-63040 Clermont-Ferrand Cedex 9 (FR)
(74) Mandataire: Demaure, Pierre-Yves
(86) Numéro de dépôt international: PCT/EP2015/054935
(87) Numéro de publication internationale: WO 2015/135928

(56) Documents cités:
- WO-A1-2013/100199
- DE-A1-102009 044 123
- JP-A- H1 076 810
- KR-A- 20130 046 188
- US-A1- 2011 125 465

## Description

### DOMAINE DE L'INVENTION

La présente invention concerne un pneumatique pour véhicule automobile comportant une bande de roulement, cette bande de roulement comportant une pluralité de rainures. Des bandes similaires sont connues par exemple de JP H10 76810 A, US 2011/125465 A1, KR 2013 0046188 A, DE 10 2009 044123 A1, WO 2013/100199 A1.

### ETAT DE LA TECHNIQUE

Afin de mouler la bande de roulement d'un pneumatique, il est connu d'utiliser des éléments moulants fixés dans un moule. Par élément moulant, on entend tout élément du moule qui comporte une surface de moulage permettant de mouler une partie de la bande de roulement d'un pneumatique. Un élément moulant peut être ainsi un bloc assemblé sur un secteur du moule ou bien un cordon rapporté(e) sur la surface radialement intérieure du moule.

Il est possible de réaliser un élément moulant par un procédé de fusion sélective plus communément nommé frittage. Ce procédé utilise un faisceau énergétique pour fusionner une poudre métallique. Par « faisceau énergétique », on entend un rayonnement électromagnétique (par exemple un faisceau laser) ou un faisceau de particules (par exemple un faisceau d'électrons).

Un procédé de frittage utilisant un laser, ci-après dénommé procédé de frittage laser, est connu du document EP1641580. Dans ce document, une première couche de poudre métallique est étalée sur un plateau. Tout ou partie des grains de cette première couche de poudre sont ensuite agglomérés par le faisceau d'un laser en fonction de la forme de l'objet que l'on souhaite obtenir. Une fois cette étape effectuée une deuxième couche de poudre est étalée sur la première couche de poudre pour être à son tour fusionnée sélectivement par laser. En répétant ces opérations d'étalement de couche et de fusion par laser, on construit couche par couche un objet fritté.

Un tel objet fritté est notamment représenté à la **figure 3** du document EP0868955. Sur cette figure, on distingue aisément la structure en strates de l'objet fritté qui est un élément moulé destiné à être rapporté dans un moule pour pneumatique. Or cette structure en strates fait apparaître dans les rainures du pneumatique moulé, des lignes de niveau qui sont le reflet de cette structure. Ce phénomène de lignes de niveau est augmenté par le caractère curviligne du moule. Ces lignes de niveau donnent au pneumatique un aspect peu esthétique.

Il existe donc un besoin de proposer une solution permettant de conserver l'utilisation du procédé de frittage laser pour fabriquer le moule servant à mouler le pneumatique tout en essayant d'améliorer l'esthétisme du pneumatique.

### DEFINITIONS

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule.

Par « texture », on entend un ensemble d'éléments organisés.

Par « flanc » d'un pneumatique, on entend une surface latérale du pneumatique disposée entre la bande de roulement du pneumatique et un bourrelet de ce pneumatique.

Par « brin », on entend un élément filiforme dont la hauteur est au moins égale à 2 fois le diamètre d'un disque de même surface que la section moyenne du brin.

Par « lamelles », on entend des brins allongés qui présentent une longueur au moins égale à deux fois leur hauteur.

### RESUME DE L'INVENTION

L'invention concerne un pneumatique en matériau caoutchoutique comprenant une bande de roulement, ladite bande de roulement comportant une pluralité de rainures, chaque rainure présentant un fond de rainure, des parois encadrant le fond de rainure et des zones de transition entre les parois et le fond de rainure. Tout ou partie des rainures comprennent une texture s'étendant uniquement sur le fond de rainure et sur au moins une partie des zones de transition associées à ce fond de rainure, ladite texture faisant contraste avec le reste du pneumatique.

En utilisant une texture dans tout ou partie des rainures de la bande de roulement, on masque ainsi la présence de lignes de niveau dans le fond des rainures.

La texture présente une luminosité, dite première luminosité L*1, comprise entre 6 et 15, et de préférence entre 8 et 9, et le reste du pneumatique présente une luminosité, dite seconde luminosité L*2, supérieure ou égale à 18 et inférieure ou égale à 30.

De cette manière, on s'assure que la texture présente un fort contraste vis-à-vis du reste du pneumatique. Par « luminosité », on entend le paramètre qui caractérise la capacité d'une surface à réfléchir la lumière. La luminosité est ici exprimée selon une échelle allant de 0 à 100 en accord avec le modèle colorimétrique L*a*b* adoptée en 1976 par la Commission Internationale de l'Eclairage (CIE). La valeur 100 représente le blanc ou la réflexion totale ; la valeur 0, le noir ou l'absorption totale.

Les valeurs de luminosité L*1 L*2 sont déterminées à l'aide d'un spectro-colorimètre, par exemple un spectro-colorimètre CM 700D de la marque KONICA-MINOLTA. On positionne cet appareil sur la texture et on vient mesurer directement la luminosité L*1 de cette texture. Cette mesure est notamment effectuée avec le mode SCI (Mode de réflexion spéculaire incluse) paramétré à un angle de 10° et un réglage de la lumière de type D65 (réglage défini selon la CIE).

De la même manière, on vient positionner l'appareil sur une autre partie du pneumatique pour déterminer une luminosité L*2. Afin d'améliorer, la détermination de cette luminosité L*2, il est possible d'effectuer une pluralité de mesures sur le pneumatique et d'en déduire une luminosité moyenne associée au reste du pneumatique. On notera que le reste du pneumatique constitue les zones du pneumatique non recouvertes par la texture selon l'invention, par exemple la surface de la bande de roulement du pneumatique ou le flanc de ce pneumatique.

Dans un mode de réalisation non limitatif, la rainure s'étend transversalement dans la bande de roulement et débouche dans une zone épaule du pneumatique, la texture s'étendant sur cette zone épaule dans le prolongement de la rainure.

Il est ainsi possible de raccourcir les longueurs des rainures transversales débouchant dans la zone épaule du pneumatique, tout en suggérant la présence de ces rainures dans le reste de la zone épaule par la texture. La demanderesse a en effet constaté que diminuer la présence des rainures dans la zone épaule permet de limiter certains efforts de brassage aérodynamique générateurs de résistance au roulement. La texture qui s'étend dans le prolongement de la rainure transversale permet de conserver l'esthétisme apporté par une rainure lorsqu'elle s'étend plus largement sur la zone épaule. Cette texture est moins génératrice d'efforts de brassage aérodynamique qu'une rainure.

Dans un premier mode de réalisation non limitatif, la texture comprend une pluralité d'éléments en protubérance par rapport au fond des rainures et aux zones de transition associées.

La texture formée par les éléments en protubérance apporte un double avantage. D'une part, cette texture permet de « piéger » tout ou partie des rayons lumineux incidents qui rencontrent les rainures de la bande de roulement. Ceci permet de donner un aspect plus noir aux rainures et en conséquence cela permet d'améliorer son contraste et donc leur visibilité par rapport au reste du pneumatique. Cette texture particulière permet ainsi d'obtenir un effet visuel de type « velours ». Enfin, la texture utilisée présente des propriétés hydrophobes de sorte que l'évacuation de l'eau, de la poussière ou de la boue hors de la rainure est facilitée.

Dans une variante de réalisation non limitative, au moins 30% des éléments en protubérance fait un angle α supérieur à 40° par rapport à un plan tangent au fond des rainures et au plus 25% des éléments des éléments en protubérance de la texture fait un angle α inférieur à 20° par rapport au plan tangent. On améliore ainsi davantage la capacité de la texture à piéger la lumière.

Dans une variante de réalisation non limitative, tout ou partie des éléments en protubérance sont des brins répartis dans la texture selon une densité au moins égale à un brin par millimètre carré (mm²), chaque brin ayant une section moyenne comprise entre 0,003 mm² et 1 mm².

Dans une autre variante de réalisation non limitative, tout ou partie des éléments en protubérance sont des lamelles sensiblement parallèles entre elles, le pas des lamelles dans la texture étant au plus égal à 0,5 mm, chaque lamelle ayant une largeur moyenne comprise entre 0,03 mm et 0,25 mm.

Dans une autre variante de réalisation non limitative, tout ou partie des éléments en protubérance forme des parallélépipèdes de côté compris entre 0,05 mm et 0,5 mm, de hauteur comprise entre 0,05 mm et 0,5 mm, la distance entre deux parallélépipèdes adjacents dans la texture étant comprise entre 0,05 mm et 0,5 mm.

Dans une autre variante de réalisation non limitative, les éléments en protubérance présentent dans la texture des formes et des distances entre éléments en protubérances variables.

Dans un deuxième mode de réalisation non limitatif, la texture comporte une pluralité d'éléments en creux par rapport au fond des rainures et aux zones de transition associées, les éléments en creux formant des ouvertures sur le fond des rainures et sur les zones de transition associées, la texture comprenant une pluralité d'ouvertures, ces ouvertures étant réparties dans la texture selon une densité au moins égale à une ouverture par millimètre carré (mm²), ces ouvertures présentant des diamètres équivalents compris entre 0,03 mm et 1,2 mm.

La texture présente ainsi une plus grande pérennité. En effet, comme cette texture est composée d'éléments en creux par rapport au fond/zones de transition des rainures, l'impact de frottements avec des cailloux est plus faible.

Dans une variante de réalisation, au moins une des rainures de la pluralité de rainures présente vue en coupe une forme globalement ondulée dans la profondeur de la bande de roulement avec des portions de rainures entièrement ouvertes sur la surface de roulement et des portions de rainures fermées en tout ou partie sur cette surface de roulement. La texture s'étend dans les portions ouvertes et les portions fermées de la rainure.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en perspective d'une partie d'un pneumatique comportant une bande de roulement conforme à l'art antérieur ;
- la **figure 2** représente schématiquement une vue en perspective d'une partie d'un pneumatique comportant une texture particulière sur le fond des rainures de la bande de roulement et sur les zones de transition associées, conformément à l'invention ;
- la **figure 3** représente schématiquement une vue en coupe d'une rainure de la bande de roulement de la **figure 2** avec la texture particulière ;
- la **figure 4** représente schématiquement une vue en perspective d'une partie d'un pneumatique de la **figure 2**, comportant une texture particulière sur le fond des rainures de la bande de roulement et sur les zones de transition associées, ladite texture s'étendant sur le pneumatique selon un mode de réalisation non limitatif ;
- la **figure 5** représente une partie de la texture de la **figure 2**, selon une première variante de réalisation d'un premier mode de réalisation de ladite texture selon lequel la texture présente des éléments en protubérance ;
- la **figure 6** représente une partie de la texture de la **figure 2**, selon une deuxième variante de réalisation d'un premier mode de réalisation de ladite texture selon lequel la texture présente des éléments en protubérance ;
- la **figure 7** représente une partie de la texture de la **figure 2**, selon une troisième variante de réalisation d'un premier mode de réalisation de ladite texture selon lequel la texture présente des éléments en protubérance ;
- la **figure 8** représente une partie de la texture de la **figure 2**, selon une quatrième variante de réalisation d'un premier mode de réalisation de ladite texture selon lequel la texture présente des éléments en protubérance ;
- la **figure 9** représente une partie de la texture de la **figure 2**, selon un deuxième mode de réalisation de ladite texture selon lequel la texture présente des éléments en creux ;
- la **figure 10** représente une vue agrandie d'une cavité d'un élément en creux de la texture de la **figure 9** ;
- la **figure 11** représente une variante de réalisation d'une rainure comportant une texture conforme à l'invention.

Dans la description qui va suivre, des éléments sensiblement identiques ou similaires seront désignés par des références identiques.

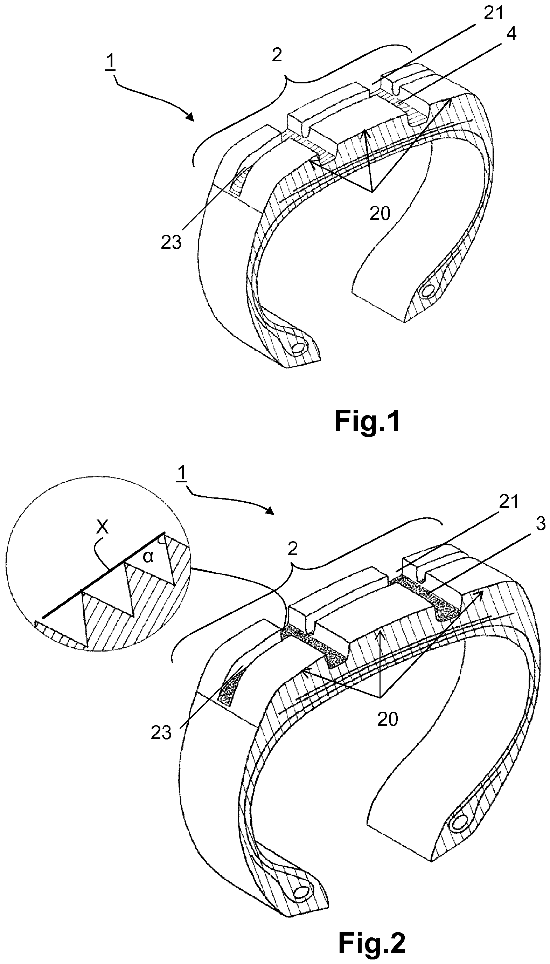

La **figure 1** représente une partie du pneumatique 1 comportant une bande de roulement 2 selon l'art antérieur. Comme on peut le voir, la bande de roulement 2 comporte une surface de roulement 20 et des rainures 21, 23. La surface de roulement 20 (appelée également zone utile) est destinée à entrer en contact avec une chaussée lorsque le pneumatique 1 roule. Les rainures 21, 23 (appelées également sculptures) permettent notamment d'évacuer l'eau et améliorent ainsi l'adhérence du pneumatique 1 sur une chaussée mouillée. En raison du procédé de frittage laser utilisé, les rainures comportent des lignes de niveau 4 notamment sur leur fond.

La **figure 2** représente une partie du pneumatique 1 comportant une bande de roulement 2 selon l'invention. La bande de roulement 2 comporte une surface de roulement 20 et une pluralité de rainures 21, 23, des rainures circonférentielles 21 et des rainures transversales 23.

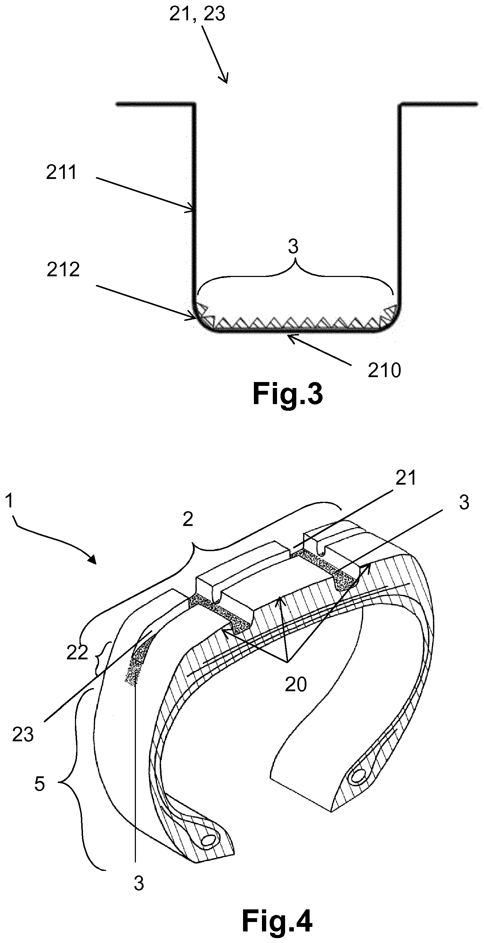

Comme illustré sur la vue en coupe d'une rainure 21 à la **figure 3****,** chaque rainure 21, 23 présente un fond de rainure 210, des parois 211 encadrant le fond de rainure 210 et des zones de transition 212 (appelées également zones de raccord) entre les parois 211 et le fond de rainure 210, ces zones 212 étant courbes, et de rayon de l'ordre de 1mm dans un exemple non limitatif. On notera que la texture 3 est illustrée schématiquement dans une rainure 21, 23 en vue zoomée. On notera également que la paroi 211 est ici représentée comme s'étendant perpendiculairement par rapport au fond 210 de la rainure. En variante, cette paroi 211 peut présenter un angle différent de 90° par rapport au fond 210.

Comme illustré sur la **figure 2** et sur la **figure 3**, tout ou partie des rainures 21, 23 comprennent une texture 3 s'étendant uniquement sur le fond de rainure 210 et sur au moins une partie des zones de transition associées 212 à ce fond de rainure, ladite texture 3 faisant contraste avec le reste du pneumatique 2. Par au moins une partie d'une zone de transition, on entend que la texture s'étend sur au moins 25% de la surface de cette zone de transition. La texture 3 ne s'étend pas sur les parois 211 de la rainure 21, 23. La texture 3 est ainsi absente des parois 211.
La texture 3 permet ainsi de cacher les lignes de niveau sur le fond, les lignes de niveau sur le fond étant particulièrement visibles auprès d'un observateur du pneumatique. Par ailleurs, le fait que la texture 3 soit disposée dans les rainures 21, 23 permet d'offrir une plus grande pérennité à ladite texture 3. En effet, l'impact des agressions mécaniques sur la texture, tels que des frottements avec des cailloux, est faible. On notera que le fait d'avoir la texture 3 également sur les zones de transition 212 des rainures 21 permet d'améliorer l'impression de profondeur apportée par la texture 3 dans la rainure.

La **figure 4** représente une partie du pneumatique 1 comportant une bande de roulement 2 dans laquelle, selon un mode de réalisation non limitatif, des rainures 23 s'étendent transversalement dans la bande de roulement 2 et débouchent dans une zone épaule 22 du pneumatique, la texture 3 s'étendant sur cette zone épaule 22 dans le prolongement des rainures transversales 23.

On rappelle que la zone épaule 22 est une zone de transition entre la surface de roulement 20 du pneumatique 1 et le flanc 5 du pneumatique 1. La zone épaule 22 n'est pas destinée à entrer en contact avec la chaussée lorsque le pneumatique 1 roule en ligne droite. La zone épaule 22 comporte des rainures 23 qui sont les rainures transversales de la bande de roulement 2.

Comme on peut le voir sur la figure, une rainure transversale 23 qui débouche sur la zone épaule 22 est illustrée. La texture 3 recouvre non seulement le fond 210 et les zones de transition 212 de cette rainure transversale 23, mais recouvre également une partie du pneumatique qui va au-delà de cette rainure 23, à savoir une partie de la zone épaule 22 qui se situe dans le prolongement de ladite rainure 23. Il y a ainsi une continuité dans la texture 3 qui recouvre le fond 210 de la rainure 23 et qui recouvre la zone épaule 22 ne comportant plus la rainure 23.

Ce mode de réalisation permet de diminuer la taille des rainures transversales 23 débouchant sur la zone épaule 22 tout en gardant un aspect esthétique du pneumatique pour un observateur. En effet, lorsque les rainures transversales 21 sont trop longues et s'étendent donc trop sur la zone épaule 22, cela induit des problèmes de friction et une augmentation de la résistance au roulement. Par ailleurs, pour conserver l'esthétisme apporté par les rainures transversales sur la zone épaule 22 (zone du pneumatique visible par l'oeil d'un observateur) tout en diminuant lesdites rainures, on remplace la partie de chaque rainure transversale 23 qui a été enlevée par de la texture 3 de type « velours » dans le prolongement desdites rainures transversales.

Selon un premier mode de réalisation non limitatif de la texture 3, la texture 3 comprend une pluralité d'éléments en protubérance par rapport au fond des rainures 210 et aux zones de transition associées 212. L'effet de ces éléments en protubérance est de « piéger » une grande quantité des rayons lumineux incidents qui rencontrent la texture 3. Dans ce premier mode de réalisation, la texture 3 (appelée « velours ») permet d'obtenir un visuel de type « velours » car les éléments en protubérance absorbent la lumière et rendent ainsi les rainures 21 plus noires. On notera que le fait de ne pas apposer de texture 3 sur les parois 211 des rainures 21, 23 améliore l'effet profondeur de la bande de roulement. De par leur structure et du fait de leur « encastrement » dans les rainures 21, 23 ces éléments en protubérance permettent par ailleurs d'évacuer plus facilement l'eau, la boue et les poussières hors des rainures 21.

Selon une variante de réalisation non limitative, au moins 30% des éléments en protubérance de la texture 3 fait un angle α supérieur à 40° par rapport à un plan tangent X au fond de rainures 210 et au plus 25% des éléments en protubérance de la texture fait un angle α inférieur à 20° par rapport au plan tangent X. Sur la partie en zoom de la texture 3 de la **figure 2** sont illustrés schématiquement les éléments en protubérance, ledit plan tangent X et ledit angle α. On notera que l'angle α est l'angle entre le plan tangent X et le côté des éléments en protubérance. Cette variante s'applique pour les éléments en protubérance 6 et 7 décrits ci-après. De la même manière, lorsque la texture s'étend sur une zone de transition 212, la plan tangent est déterminé par rapport à cette zone de transition 212.

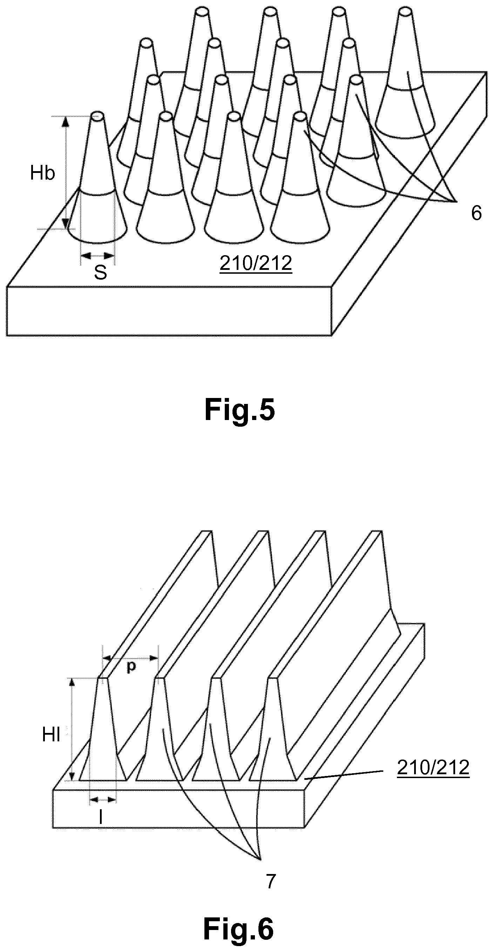

La **figure 5** illustre la texture 3 selon une première variante de réalisation non limitative du premier mode de réalisation. Dans cette variante, tout ou partie des éléments en protubérance sont des brins 6 répartis dans la texture 3 selon une densité au moins égale à un brin par millimètre carré (mm²), chaque brin ayant une section moyenne S comprise entre 0,003 mm² et 1 mm². On notera que la section moyenne de chaque brin correspond à la moyenne des sections S mesurées à intervalles réguliers depuis la base du brin. Les brins 6 ont une forme globalement conique avec une section diminuant dans la hauteur Hb de ces brins.

La **figure 6** illustre la texture 3 selon une deuxième variante de réalisation non limitative du premier mode de réalisation. Dans cette variante, tout ou partie des éléments en protubérance sont des lamelles 7 sensiblement parallèles entre elles, le pas P des lamelles dans la texture étant compris entre 0,1 mm et 0,5 mm, chaque lamelle 7 ayant une largeur moyenne comprise entre 0,03 mm et 0,25 mm. On notera que la largeur moyenne correspond à la moyenne des largeurs 1 mesurées à intervalles réguliers dans la hauteur H1 de la lamelle, la hauteur de chaque lamelle étant comprise entre 0,05 et 0,5mm.

Dans une autre variante de réalisation, la texture comporte une combinaison de brins 6 et de lamelles 7.

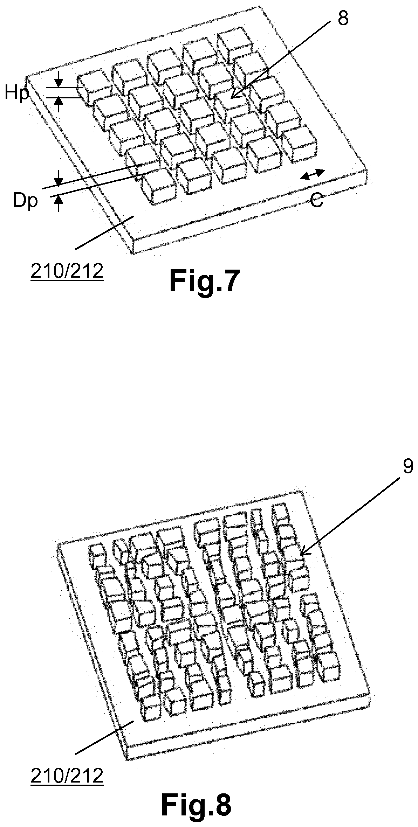

La **figure 7** illustre la texture 3 selon une troisième variante de réalisation non limitative du premier mode de réalisation. Dans cette variante, tout ou partie des éléments en protubérance forme des parallélépipèdes 8 de côté C compris entre 0,05 mm et 0,5 mm, de hauteur Hp comprise entre 0,05 mm et 0,5 mm, la distance Dp entre deux parallélépipèdes adjacents 8 dans la texture étant comprise entre 0,05 mm et 0.5 mm.

Dans une autre variante de réalisation, la texture comporte une combinaison des éléments en relief 6, 7 et 8, ou 6 et 8, ou encore 7 et 8 décrits ci-dessus.

La **figure 8** illustre la texture 3 selon une quatrième variante de réalisation non limitative du premier mode de réalisation. Dans cette variante, les éléments en protubérance 9 présentent dans la texture 3 des formes et des distances entre éléments en protubérance variables. Cette variante permet d'améliorer le rendu esthétique de la texture 3.

Selon un deuxième mode de réalisation non limitatif de la texture 3, la texture 3 comprend une pluralité d'éléments en creux 10 (appelés également trous) par rapport au fond 210 des rainures et aux zones de transition associées 212. Les éléments en creux 10 sont composés d'ouvertures 11 sur le fond 210 et sur les zones de transition 212, et de cavités associées 12 s'étendant dans la profondeur du fond 210, et dans la profondeur des zones de transitions associées 212.

Ainsi, la texture 3 comporte une pluralité d'ouvertures 11 dans le fond des rainures 210 et dans les zones de transition associées 212, lesdites ouvertures 11 étant réparties dans la texture 3 selon une densité au moins égale à une ouverture par millimètre carré (mm²) et présentant (sur le fond et sur les zones de transition) des diamètres Dt équivalents compris entre 0,03 mm et 1,2 mm.

Dans un mode de réalisation non limitatif, les ouvertures 11 occupent au moins 30% de la texture 3.

Selon d'autres modes de réalisation non limitatifs, les ouvertures 11 occupent au moins 50% de la texture 3, voire plus de 70%. On notera que plus le taux d'occupation des ouvertures sur la texture est important, meilleur est le masquage des lignes de niveau issues du procédé de moulage, et meilleure est la qualité de contraste de cette texture par rapport au reste de la bande de roulement (notamment par rapport à la surface de roulement, à la zone épaule ou encore au flanc).

Les ouvertures 11 se prolongent dans la profondeur du fond 210 des rainures et dans la profondeur des zones de transition 212 des rainures pour former des cavités 12.

L'effet de ces cavités 12 est de « piéger » une grande quantité des rayons lumineux incidents qui rencontrent la texture 3. En effet, comme les cavités 12 sont en creux dans le fond 210 et dans les zones de transition 212, l'impact des agressions mécaniques sur la texture, tels que des frottements avec des cailloux, est plus faible que pour des protubérances. Dans ce deuxième mode de réalisation, la texture 3 (appelée « velours ») permet d'obtenir un visuel de type « velours » car les cavités absorbent la lumière et rendent ainsi le fond 210 des rainures 21 plus noires. L'effet visuel des rainures est amélioré.

Dans un mode de réalisation non limitatif, tout ou partie des cavités 12 a une profondeur au moins égale à 0.1mm. Dans une variante de réalisation non limitative, tout ou partie des cavités 12 a une profondeur comprise entre 0.2 mm et 0.6 mm. De cette manière, on s'assure qu'une grande quantité de rayons lumineux incidents qui rencontre la texture 3 est piégée par ladite texture et, comme la profondeur des cavités est limitée, on évite également de trop dégrader la résistance mécanique des rainures 21.

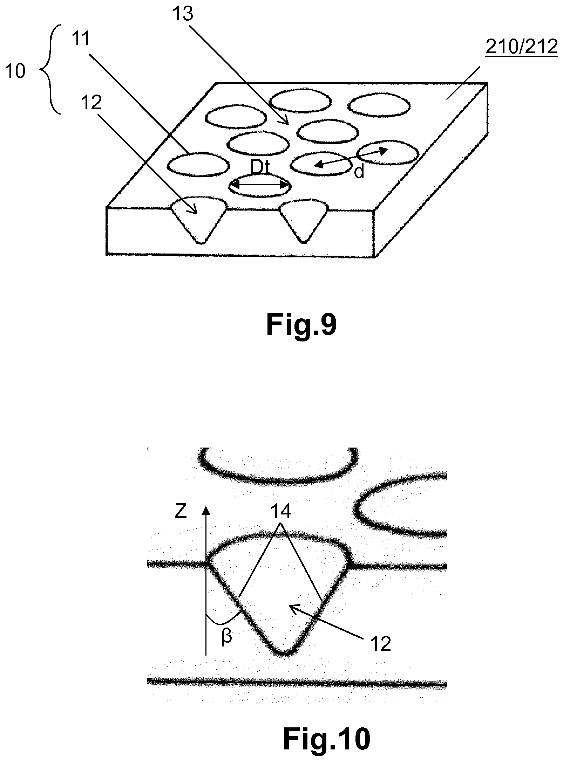

La **figure 9** illustre la texture 3 selon une première variante non limitative de ce deuxième mode de réalisation. Dans cette variante, tout ou partie des cavités 12 sont en forme de cônes qui s'étendent dans la profondeur du fond 210 et des zones de transition 212 des rainures 21 et débouchent sur la surface dudit fond 210 et desdites zones de transition 212 en formant des ouvertures circulaires 11. Les cavités 12 ont ainsi une section qui diminue dans la profondeur. De cette manière, on améliore le contraste de la texture 3 et donc du fond 210 et des zones de transition 212 par rapport au reste de la bande de roulement 2. On notera que dans cette variante, les ouvertures 11 des cavités 12 ne se touchent pas. Les ouvertures 11 sont séparées par des zones intermédiaires 13. En outre, les ouvertures 11 sont régulièrement réparties sur le fond 210 des rainures 21, 23 de sorte que la distance d entre chaque ouverture de la texture 3 est globalement similaire. Il en est de même pour les zones de transition 212 des rainures 21.

La **figure 10** est un zoom sur une cavité 12 d'un élément en creux 10 de la texture de la **figure 9**. Dans un mode de réalisation non limitatif, tout ou partie des cavités a au moins une paroi 14 qui, selon une vue en coupe, forme un angle β compris entre 10° et 60°, par rapport à une direction Z perpendiculaire à la texture 3.

A chaque fois qu'un rayon lumineux rencontre une paroi 14 de la cavité 12, celui-ci est réfléchi par ladite paroi 14. La direction de réflexion du rayon lumineux dépend de la direction initiale de ce rayon lumineux et de l'angle d'inclinaison de la paroi 14. Ainsi, en fonction de cette direction initiale et de cet angle d'inclinaison, le rayon lumineux peut être renvoyé vers une autre paroi 14 de la cavité. A l'inverse, le rayon lumineux peut être renvoyé à l'extérieur de la cavité, par exemple directement vers un observateur. Dans le premier cas, le rayon lumineux « se perd » dans la cavité et il ne sera plus perceptible par l'oeil d'un observateur. Dans le second cas, l'observateur peut percevoir le rayon lumineux et la texture peut apparaître alors comme étant plus claire et donc moins en contraste vis-à-vis du reste de la bande de roulement. En choisissant une cavité 12 ayant au moins une paroi 14 qui forme un angle β compris entre 10° et 60°, on s'assure qu'une grande partie des rayons lumineux rentrant dans la cavité 12 va être absorbée par cette cavité sous l'effet de réflexions multiples à l'intérieur de la cavité. De cette manière, on améliore le contraste de la texture 3 (et notamment du fond 210 des rainures 21, 23) par rapport au reste du pneumatique (notamment par rapport au flanc ou par rapport à la surface de roulement), tout en conservant le même taux d'occupation des cavités dans la texture. En outre, avec cette inclinaison de paroi, on améliore globalement la résistance de la texture, notamment lors de frottements répétés avec des cailloux.

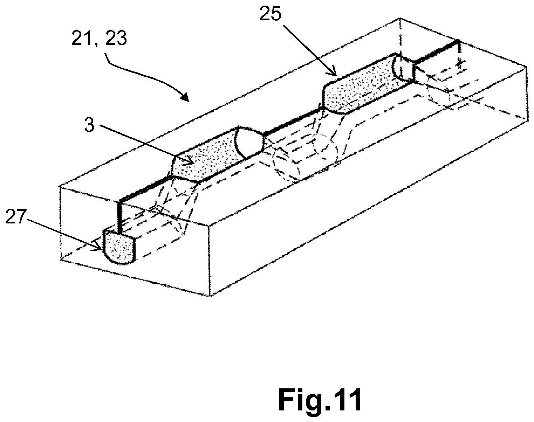

La **figure 11** représente une variante de réalisation dans laquelle au moins une des rainures de la pluralité de rainures 21, 23 présente vue en coupe une forme globalement ondulée avec des portions de rainure entièrement ouvertes 25 sur la surface de roulement et des portions de rainures fermées en tout ou partie sur cette surface de roulement. La texture 3 s'étend dans les portions ouvertes 25 et les portions fermées 27 de la rainure 21, 23.

L'invention n'est pas limitée aux exemples décrits et représentés et diverses modifications peuvent y être apportées sans sortir de son cadre tel que défini par les revendications.

Ainsi, selon une autre variante de réalisation non limitative, les lamelles 7 de la **figure 6** peuvent être discontinues. Elles présentent une partie plane entre elles. Elles peuvent en outre présenter entre elles des différences de section. De plus, les lamelles peuvent posséder des courbures ou des angles, notamment dans leur longueur. Elles peuvent en outre, être de longueur variable.

Ainsi, selon une autre variante de réalisation non limitative, les ouvertures 11 peuvent avoir la forme circulaire, carrée, ou encore polygonales (par exemple hexagonales) et les cavités 12 correspondantes une forme de cylindres, de parallélépipèdes, ou encore de polygones. Avec ces deux dernières structures (carrée ou polygonale), il est possible d'organiser plus facilement les ouvertures 11 les unes par rapport aux autres de sorte à limiter la surface des zones intermédiaires 13 entre ces ouvertures. Avec de telles formes d'ouvertures, on peut arriver plus aisément à des taux conséquents d'occupation des ouvertures.

Ainsi, dans une variante de réalisation non limitative, le prolongement de la texture sur le flanc, n'est présent que sur le flanc monté côté extérieur du véhicule, c'est-à-dire le flanc présent sur le côté du pneumatique visible par un utilisateur lorsque le pneumatique est monté sur un véhicule.

Ainsi, l'invention décrite présente notamment les avantages suivants :
- la texture 3 permet de masquer les lignes de niveau dans les rainures 21, 23 ;
- la texture 3 (que ce soit avec des éléments en protubérance et/ou avec des éléments en creux) permet dans le même temps d'absorber la lumière et donc de donner un aspect plus noir aux rainures 21, 23 par rapport au reste de la bande de roulement 2. On améliore ainsi le contraste des rainures 21 par rapport au reste de la bande de roulement ;
- La texture 3 permet d'obtenir un visuel au niveau des rainures 21, 23, de type « velours », qui apporte un effet de contraste et de profondeur dans les rainures 21, 23, de sorte qu'elles apparaissent plus profondes à l'oeil d'un observateur ;
- Le prolongement de la texture 3 sur la zone épaule 22 permet si besoin est de réduire la longueur des rainures transversales sur la zone épaule. On améliore ainsi la performance aérodynamique du pneumatique (diminution des efforts de brassage aérodynamique) tout en gardant un pneumatique globalement esthétique. Il y a ainsi moins de résistance au roulement et en conséquence la consommation d'essence est réduite.

## Revendications

1. Pneumatique en matériau caoutchoutique comprenant une bande de roulement (2), ladite bande de roulement (2) comportant
une pluralité de rainures (21, 23), chaque rainure (21, 23) présentant un fond de rainure (210), des parois (211) encadrant le fond de rainure et des zones de transition (212) entre les parois (211) et le fond de rainure (210),
tout ou partie des rainures (21, 23) comprenant une texture (3) s'étendant uniquement sur le fond de rainure (210) et sur au moins une partie des zones de transition associées (212) à ce fond de rainure, ladite texture (3) faisant contraste avec le reste du pneumatique (2) et **caractérisé en ce que** la texture a une luminosité, dite première luminosité L*1, comprise entre 6 et 15, et de préférence entre 8 et 9, et le reste du pneumatique a une luminosité, dite seconde luminosité L*2, supérieure ou égale à 18 et inférieure ou égale à 30,
le paramètre luminosité caractérisant la capacité d'une surface à réfléchir la lumière,
la luminosité étant exprimée selon une échelle allant de 0 à 100 en accord avec le modèle colorimétrique L*a*b* adopté en 1976 par la Commission Internationale de l'Eclairage, où la valeur 100 représente le blanc ou la réflexion totale, et la valeur 0 représente le noir ou l'absorption totale.

2. Pneumatique selon la revendication 1, **caractérisé en ce qu'**au moins une des rainures (23) s'étend transversalement dans la bande de roulement (2) et débouche dans une zone épaule du pneumatique (22), la texture (3) s'étendant sur cette zone épaule (22) dans le prolongement de la rainure (23).

3. Pneumatique selon l'une quelconque des revendications 1 ou 2, **caractérisé en ce que** la texture (3) comprend une pluralité d'éléments (6, 7, 8, 9) en protubérance par rapport au fond des rainures (210) et aux zones de transition associées (212).

4. Pneumatique selon la revendication 3, **caractérisé en ce que** au moins 30% des éléments en protubérance (6, 7) fait un angle α supérieur à 40° par rapport à un plan tangent à la rainure (210, 212) et **en ce que** au plus 25% des éléments en protubérance (6, 7) de la texture (3) fait un angle α inférieur à 20° par rapport à ce plan tangent de la rainure (210, 212)

5. Pneumatique selon l'une des revendications 3 ou 4, **caractérisé en ce que** tout ou partie des éléments en protubérance sont des brins (6) répartis dans la texture (3) selon une densité au moins égale à un brin par millimètre carré (mm²), chaque brin ayant une section moyenne comprise entre 0,003 mm² et 1 mm².

6. Pneumatique selon l'une quelconque des revendications 3 à 5, **caractérisé en ce que** tout ou partie des éléments en protubérance sont des lamelles (7) sensiblement parallèles entre elles, le pas (P) des lamelles dans la texture étant au plus égal à 0,5 mm, chaque lamelle ayant une largeur moyenne comprise entre 0,03 mm et 0,25 mm.

7. Pneumatique selon l'une quelconque des revendications 3 à 6, **caractérisé en ce que** tout ou partie des éléments en protubérance forme des parallélépipèdes (8) de côté (C) compris entre 0,05 mm et 0,5 mm, de hauteur (Hp) comprise entre 0,05 mm et 0,5 mm, la distance entre deux parallélépipèdes adjacents dans la texture (3) étant comprise entre 0,05 mm et 0,5 mm.

8. Pneumatique selon l'une quelconque des revendications 3 à 7, **caractérisé en ce que** les éléments en protubérance (9) présentent dans la texture des formes et des distances entre éléments en protubérance variables.

9. Pneumatique selon l'une quelconque des revendications 1 à 2, **caractérisé en ce que** la texture (3) comporte une pluralité d'éléments en creux (10) par rapport au fond (210) des rainures et aux zones de transition associées (212), les éléments en creux (10) formant des ouvertures (11) sur le fond (210) des rainures (21) et sur les zones de transition associées (212), la texture (3) comprenant une pluralité d'ouvertures (11), ces ouvertures (11) étant réparties dans la texture (3) selon une densité au moins égale à une ouverture par millimètre carré (mm²), ces ouvertures (11) présentant des diamètres équivalents compris entre 0,03 mm et 1,2 mm.

10. Pneumatique selon l'une quelconque des revendications 1 à 9, **caractérisé en ce que** au moins une des rainures de la pluralité de rainures (21, 23) présente vue en coupe une forme globalement ondulée avec des portions de rainures entièrement ouvertes (25) sur la surface de roulement et des portions de rainures fermées (27) en tout ou partie sur cette surface de roulement, la texture (3) s'étendant dans les portions ouvertes (25) et les portions fermées (27) de la rainure (21, 23).

## Patentansprüche

1. Reifen aus Kautschukmaterial mit einem Laufstreifen (2), wobei der Laufstreifen (2) eine Vielzahl von Rillen (21, 23) beinhaltet, wobei jede Rille (21, 23) einen Rillenboden (210), den Rillenboden einrahmende Wände (211) und Übergangsbereiche (212) zwischen den Wänden (211) und dem Rillenboden (210) aufweist, wobei alle oder ein Teil der Rillen (21, 23) eine Struktur (3) umfassen, die sich nur auf dem Rillenboden (210) und auf mindestens einem Teil der zu diesem Rillenboden gehörenden Übergangsbereiche (212) erstreckt, wobei die Struktur (3) mit dem Rest des Reifens (2) einen Kontrast bildet, und **dadurch gekennzeichnet, dass** die Struktur eine Helligkeit, erste Helligkeit L*1 genannt, zwischen 6 und 15 und bevorzugt zwischen 8 und 9 hat und der Rest des Reifens eine Helligkeit, zweite Helligkeit L*2 genannt, größer oder gleich 18 und kleiner oder gleich 30 hat, wobei der Parameter Helligkeit das Vermögen einer Oberfläche kennzeichnet, das Licht zu reflektieren, wobei die Helligkeit auf einer Skala von 0 bis 100 nach dem von der Internationalen Beleuchtungskommission im Jahr 1976 angenommenen Farbmodell L*a*b* ausgedrückt wird, bei dem der Wert 100 für Weiß oder Totalreflexion und der Wert 0 für Schwarz oder Totalabsorption steht.

2. Reifen nach Anspruch 1, **dadurch gekennzeichnet, dass** sich mindestens eine der Rillen (23) in dem Laufstreifen (2) quer erstreckt und in einem Schulterbereich des Reifens (22) mündet, wobei sich die Struktur (3) auf diesem Schulterbereich (22) in der Verlängerung der Rille (23) erstreckt.

3. Reifen nach einem der Ansprüche 1 oder 2, **dadurch gekennzeichnet, dass** die Struktur (3) eine Vielzahl von Elementen (6, 7, 8, 9) umfasst, die in Bezug auf den Boden der Rillen (210) und die zugehörigen Übergangsbereiche (212) vorspringen.

4. Reifen nach Anspruch 3, **dadurch gekennzeichnet, dass** mindestens 30 % der vorspringenden Elemente (6, 7) einen Winkel α von mehr als 40° in Bezug auf eine Tangentialebene zur Rille (210, 212) bilden, und dadurch, dass höchstens 25 % der vorspringenden Elemente (6, 7) der Struktur (3) einen Winkel α von weniger als 20° in Bezug auf diese Tangentialebene der Rille (210, 212) bilden.

5. Reifen nach einem der Ansprüche 3 oder 4, **dadurch gekennzeichnet, dass** alle oder ein Teil der vorspringenden Elemente Fasern (6) sind, die in der Struktur (3) mit einer Dichte von mindestens einer Faser je Quadratmillimeter (mm²) verteilt sind, wobei jede Faser einen mittleren Querschnitt zwischen 0,003 mm² und 1 mm² hat.

6. Reifen nach einem der Ansprüche 3 bis 5, **dadurch gekennzeichnet, dass** alle oder ein Teil der vorspringenden Elemente Lamellen (7) sind, die im Wesentlichen parallel zueinander verlaufen, wobei die Schrittweite (P) der Lamellen in der Struktur höchstens 0,5 mm beträgt, wobei jede Lamelle eine mittlere Breite zwischen 0,03 mm und 0,25 mm hat.

7. Reifen nach einem der Ansprüche 3 bis 6, **dadurch gekennzeichnet, dass** alle oder ein Teil der vorspringenden Elemente Quader (8) mit einer Kantenlänge (C) zwischen 0,05 mm und 0,5 mm mit einer Höhe (Hp) zwischen 0,05 mm und 0,5 mm bilden, wobei der Abstand zwischen zwei benachbarten Quadern in der Struktur (3) zwischen 0,05 mm und 0,5 mm beträgt.

8. Reifen nach einem der Ansprüche 3 bis 7, **dadurch gekennzeichnet, dass** die vorspringenden Elemente (9) in der Struktur variable Formen und Abstände zwischen vorspringenden Elementen aufweisen.

9. Reifen nach einem der Ansprüche 1 bis 2, **dadurch gekennzeichnet, dass** die Struktur (3) eine Vielzahl von in Bezug auf den Boden (210) der Rillen und die zugehörigen Übergangsbereiche (212) vertieften Elementen (10) umfasst, wobei die vertieften Elemente (10) Öffnungen (11) auf dem Boden (210) der Rillen (21) und auf den zugehörigen Übergangsbereichen (212) bilden, wobei die Struktur (3) eine Vielzahl von Öffnungen (11) umfasst, wobei diese Öffnungen (11) in der Struktur (3) mit einer Dichte von mindestens einer Öffnung je Quadratmillimeter (mm²) verteilt sind, wobei diese Öffnungen (11) äquivalente Durchmesser zwischen 0,03 mm und 1,2 mm aufweisen.

10. Reifen nach einem der Ansprüche 1 bis 9, **dadurch gekennzeichnet, dass** mindestens eine der Rillen der Vielzahl von Rillen (21, 23) in der Schnittansicht eine insgesamt wellige Form mit auf der Lauffläche vollständig offenen Rillenabschnitten (25) und auf dieser Lauffläche ganz oder teilweise geschlossenen Rillenabschnitten (27) aufweist, wobei sich die Struktur (3) in den offenen Abschnitten (25) und den geschlossenen Abschnitten (27) der Rille (21, 23) erstreckt.

## Claims

1. Tyre made of rubber material, comprising a tread (2), said tread (2) having a plurality of grooves (21, 23), each groove (21, 23) having a groove bottom (210), walls (211) flanking the groove bottom and transition regions (212) between the walls (211) and the groove bottom (210), all or some of the grooves (21, 23) comprise a texture (3) extending only over the groove bottom (210) and over at least a part of the transition regions (212) associated with this groove bottom, said texture (3) contrasting with the rest of the tyre (2) **characterized in that** the texture has a lightness, known as first lightness L*1, of between 6 and 15, and preferably between 8 and 9, and the rest of the tyre has a lightness, known as second lightness L*2, greater than or equal to 18 and less than or equal to 30, the lightness parameter characterizing the capacity of a surface to reflect light, lightness being expressed using a scale that ranges from 0 to 100 in accordance with the L*a*b* colour model adopted in 1976 by the International Commission on Illumination (CIE), where the value 100 represents white or total reflection, and the value 0 represents black or total absorption.

2. Tyre according to either of Claim 1, **characterized in that** at least one of the grooves (23) extends transversely through the tread (2) and leads onto a shoulder region of the tyre (22), the texture (3) extending onto this shoulder region (22) in continuation of the groove (23).

3. Tyre according to any one of Claims 1 to 2, **characterized in that** the texture (3) comprises a plurality of elements (6, 7, 8, 9) that protrude from the bottom (210) of the grooves and from the associated transition regions (212).

4. Tyre according to Claim 3, **characterized in that** at least 30% of the protruding elements (6, 7) form an angle α of greater than 40° with respect to a plane tangent to the groove (210, 212), and **in that** at most 25% of the protruding elements (6, 7) of the texture (3) form an angle α of less than 20° with respect to this plane tangent to the groove (210, 212).

5. Tyre according to either of Claims 3 and 4, **characterized in that** all or some of the protruding elements are strands (6) distributed through the texture (3) at a density at least equal to one strand per square millimetre (mm²), each strand having a mean cross section of between 0.003 mm² and 1 mm².

6. Tyre according to any one of Claims 3 to 5, **characterized in that** all or some of the protruding elements are substantially mutually parallel lamellae (7), the spacing (P) of the lamellae in the texture being at most equal to 0.5 mm, each lamella having a mean width of between 0.03 mm and 0.25 mm.

7. Tyre according to any one of Claims 3 to 6, **characterized in that** all or some of the protruding elements form parallelepipeds (8) having a side length (C) of between 0.05 mm and 0.5 mm and a height (Hp) of between 0.05 mm and 0.5 mm, the distance between two adjacent parallelepipeds in the texture (3) being between 0.05 mm and 0.5 mm.

8. Tyre according to any one of Claims 3 to 7, **characterized in that** the protruding elements (9) have variable shapes and distances between protruding elements in the texture.

9. Tyre according to any one of Claims 1 to 2, **characterized in that** the texture (3) has a plurality of elements (10) that are recessed into the bottom (210) of the grooves and into the associated transition regions (212), the recessed elements (10) forming openings (11) in the bottom (210) of the grooves (21) and in the associated transition regions (212), the texture (3) comprising a plurality of openings (11), these openings (11) being distributed through the texture (3) at a density at least equal to one opening per square millimetre (mm²), these openings (11) having equivalent diameters of between 0.03 mm and 1.2 mm.

10. Tyre according to any one of Claims 1 to 9, **characterized in that** at least one of the grooves of the plurality of grooves (21, 23) has, in cross section, an undulating overall shape with entirely open groove portions (25) at the tread surface and completely or partially closed groove portions (27) at this tread surface, the texture (3) extending through the open portions (25) and the closed portions (27) of the groove (21, 23).
